# EUROPEAN PATENT APPLICATION

(11) **EP 4 831 475 A1**
(43) Date of publication of application: **28.10.2026**
(21) Application number: 26166180.5
(22) Date of filing: 19.03.2026
(51) Int. Cl.: F02M 21/02, F02M 61/08, F02M 61/20

(54) **INJECTOR**

(30) Priority: 23.04.2025 JP 2025071909
(71) Applicant: Nikki Co., Ltd., Atsugi, Kanagawa 243-0801 (JP)
(72) Inventor: AIZAWA, Shutaro, Atsugi-shi, 243-0801 (JP); JINNAI, Hiromasa, Atsugi-shi, 243-0801 (JP)
(74) Representative: Boult Wade Tennant LLP

(57) **Abstract**

An injector (1) includes: a body portion (10) defining a flow path (FP) for gaseous fuel from an inlet port (11) to an outlet port (12) along an axial direction; a valve shaft portion (20) movable forward and backward along the axial direction and provided with a valve member (24) at a distal end portion (20b) to open and close the outlet port (12); a spring (31) biasing the valve shaft portion (20) backward to close the outlet port (12); and a solenoid (40) driving the valve shaft portion (20) forward against elasticity of the spring (31) to open the outlet port (12). The valve shaft portion (20) includes a pressure receiving portion (25) configured to receive a pressure of the gaseous fuel in the flow path (FP) in the backward direction. This configuration facilitates opening of the valve member (24) by reducing the influence of the pressure of gaseous fuel.

## Description

### Technical Field

The present invention relates to an injector.

### Background Art

Conventionally, as an injector mounted on a vehicle for injecting fuel, a direct injection-type injector that directly injects fuel into a cylinder of an engine is known. Among such direct injection-type injectors, there is also known one adopting an outward opening type, i.e., a structure in which a valve member is pulled toward a valve seat to close the valve, in order to prevent unintended valve opening due to in-cylinder pressure (see, for example, JP 2001-082254 A).

### Citation List

### Patent Literature

Patent Literature 1: JP 2001-082254 A

### Summary of Invention

### Technical Problem

In the outward opening-type injector described above, a spring is used to pull the valve member toward the valve seat for closing against the pressure of the supplied gaseous fuel, so as to prevent the valve member from unintentionally opening due to the pressure. However, when a pressure in a main body is low, there is a problem that a spring load is excessively large, making the valve member difficult to open. In a case where an electromagnetic attraction force of a solenoid is increased to counter the spring load, impact upon valve closing increases. This leads to problems such as deterioration in durability and noise performance, as well as increased size and cost associated with the enlargement of the device.

The present invention has been made in view of the above problems, and an object thereof is to provide an injector that facilitates opening of a valve member by reducing the influence of the pressure of gaseous fuel.

### Solution to Problem

According to one aspect of the present invention, an electromagnetically driven injector for injecting gaseous fuel into a cylinder of an engine includes: a body portion in which at least a part of a flow path is formed, the gaseous fuel supplied from an inlet port flowing through the flow path toward an outlet port side along an axial direction; a valve shaft portion disposed inside the body portion so as to be movable forward and backward along the axial direction, the valve shaft portion being provided with a valve member configured to open and close the outlet port at a distal end portion thereof; a spring configured to bias the valve shaft portion in a backward direction to close the outlet port; and a solenoid configured to drive the valve shaft portion in a forward direction against elasticity of the spring to open the outlet port, wherein the valve shaft portion includes a pressure receiving portion configured to receive a pressure of the gaseous fuel flowing in the flow path in the backward direction.

According to the present invention, it is possible to provide an injector that facilitates opening of the valve member by reducing the influence of the pressure of gaseous fuel.

### Brief Description of Drawings

FIG. 1 is a perspective view schematically illustrating an example of an embodiment of an injector according to the present invention;
FIG. 2 is a plan view schematically illustrating an example of the embodiment of the injector according to the present invention;
FIG. 3 is a sectional view taken along line A-A illustrated in FIG. 2;
FIG. 4 is a sectional view taken along line B-B illustrated in FIG. 2;
FIG. 5 is an enlarged sectional view of the main part of FIG. 3;

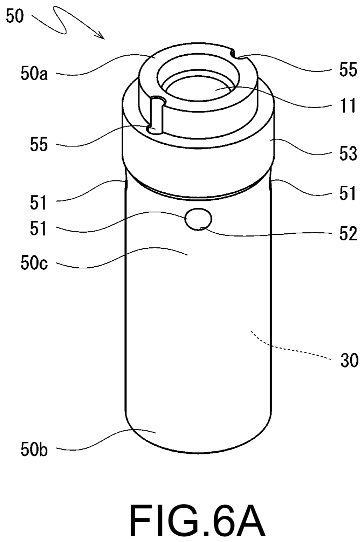

FIG. 6A is a perspective view illustrating an inflow-side block in an example of the embodiment of the injector according to the present invention;

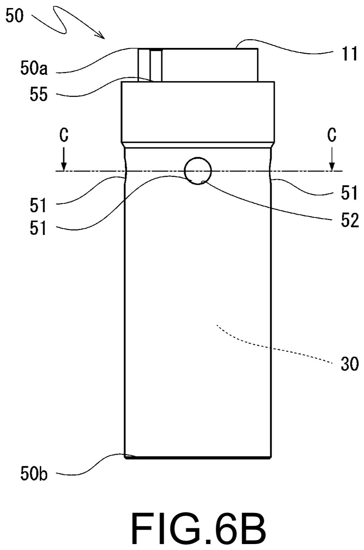

FIG. 6B is a front view illustrating the inflow-side block in the example of the embodiment of the injector according to the present invention;

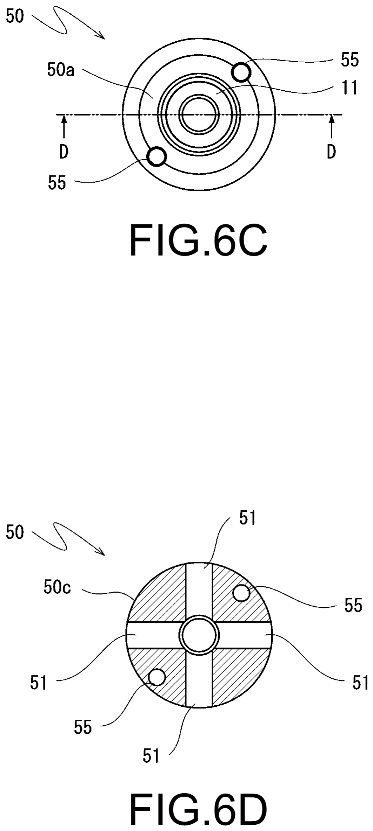

FIG. 6C is a plan view illustrating the inflow-side block in the example of the embodiment of the injector according to the present invention;
FIG. 6D is a sectional view taken along line C-C illustrated in FIG. 6B;

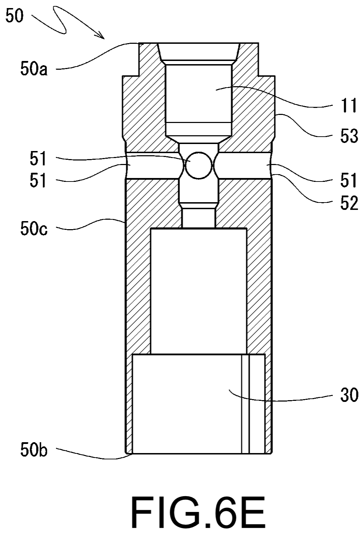

FIG. 6E is a sectional view taken along line D-D illustrated in FIG. 6C;

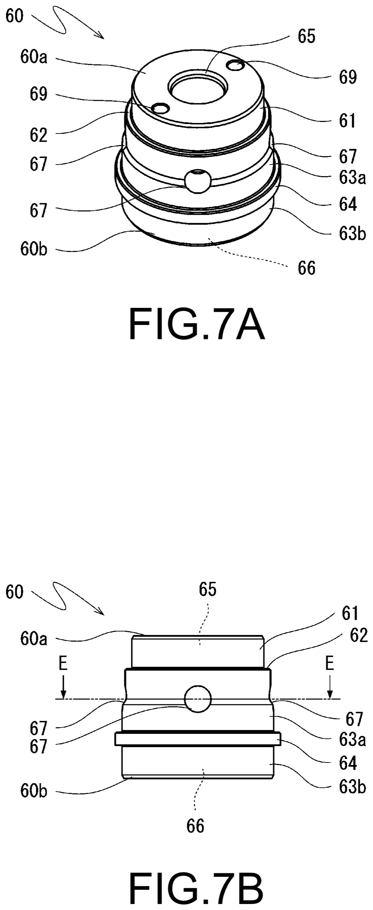

FIG. 7A is a perspective view illustrating a bearing block in an example of the embodiment of the injector according to the present invention;
FIG. 7B is a front view illustrating the bearing block in the example of the embodiment of the injector according to the present invention;

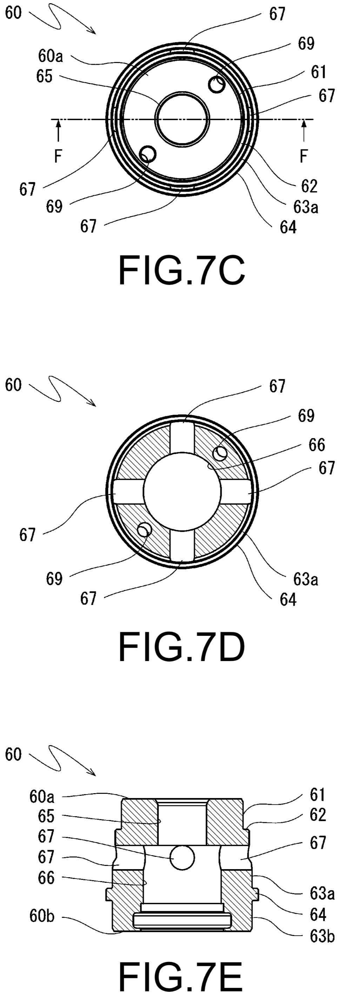

FIG. 7C is a plan view illustrating the bearing block in the example of the embodiment of the injector according to the present invention;
FIG. 7D is a sectional view taken along line E-E illustrated in FIG. 7B;
FIG. 7E is a sectional view taken along line F-F illustrated in FIG. 7C;

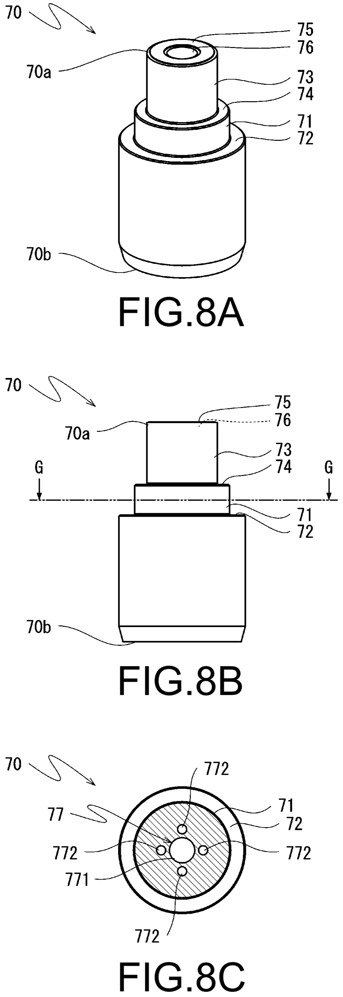

FIG. 8A is a perspective view illustrating an outflow-side block in an example of the embodiment of the injector according to the present invention;
FIG. 8B is a front view illustrating the outflow-side block in the example of the embodiment of the injector according to the present invention;
FIG. 8C is a sectional view taken along line G-G illustrated in FIG. 8B; and
FIG. 9 is an enlarged sectional view of the main part in an example of a different embodiment of the injector according to the present invention.

### Description of Embodiments

Hereinafter, preferred embodiments of the present invention will be described with reference to the drawings.

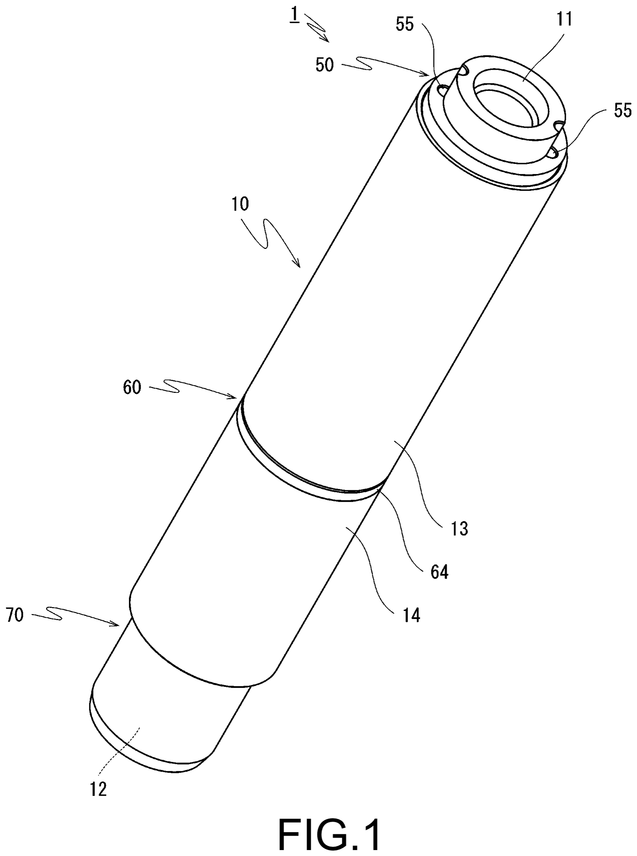

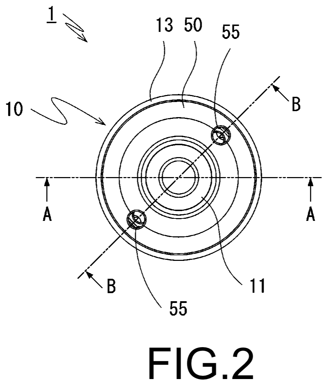

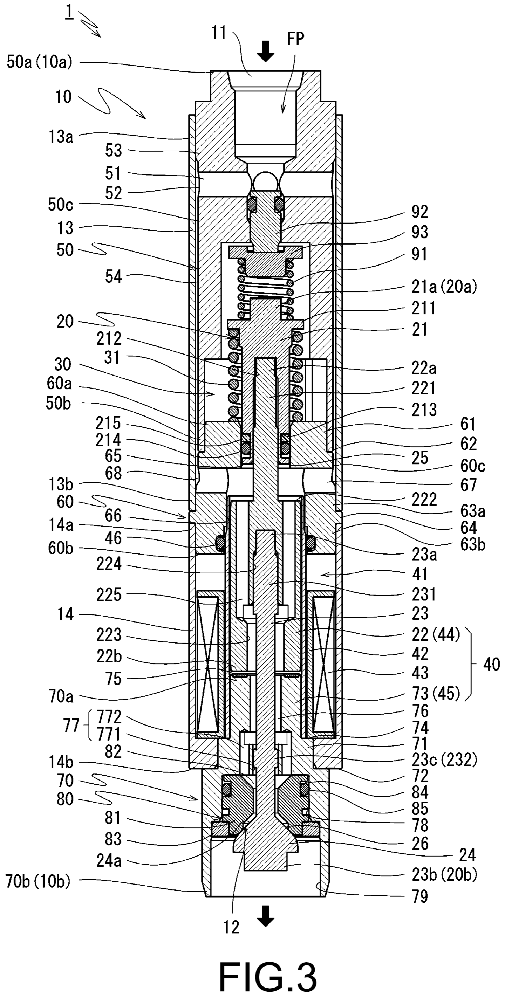

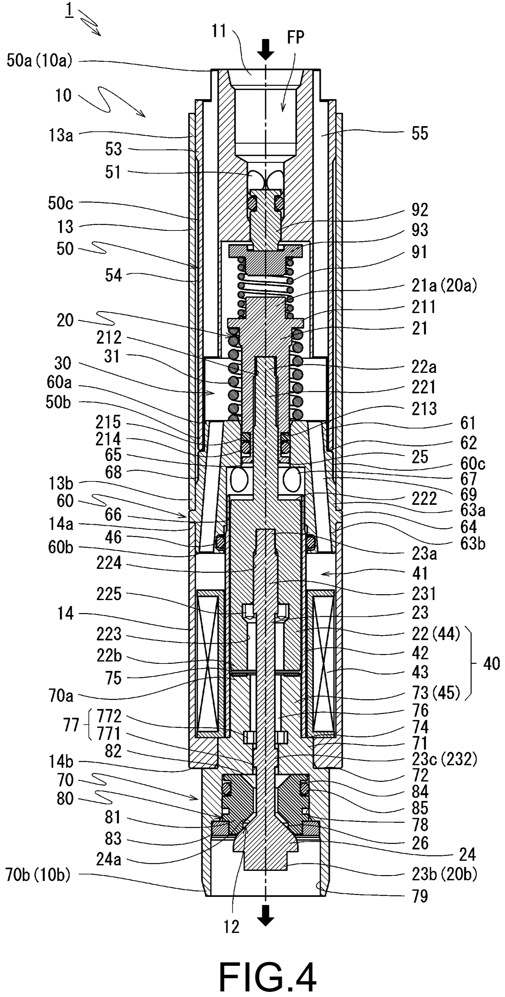

FIG. 1 is a perspective view schematically illustrating an injector according to the present embodiment, FIG. 2 is a plan view thereof, FIG. 3 is a sectional view taken along line A-A of FIG. 2, and FIG. 4 is a sectional view taken along line B-B of FIG. 2.

### <Overall Structure of Injector 1>

An injector 1 illustrated as an example in these drawings includes a body portion 10 in which at least a part of a flow path FP is formed such that gaseous fuel supplied from an inlet port 11 flows toward an outlet port 12 side along an axial direction in injecting the gaseous fuel into a cylinder of an engine (not illustrated). Note that when the injector 1 is used as a direct injection-type injector, a nozzle member (not illustrated) is separately attached to the outlet port 12 side, and the nozzle member can be inserted into a cylinder of the engine.

Inside the body portion 10, a valve shaft portion 20, formed by coaxially joining a proximal-end-side member 21, a plunger member 22, and a distal-end-side member 23 in this order, is disposed so as to be movable forward and backward along the axial direction. A distal end portion 20b of the valve shaft portion 20 is provided with a valve member 24 that opens and closes the outlet port 12. Note that details of the valve shaft portion 20 will be described later.

Also disposed inside the body portion 10 are a spring 31 that biases the valve shaft portion 20 in a backward direction to close the outlet port 12, and a solenoid 40 that drives the valve shaft portion 20 in a forward direction against the elasticity of the spring 31 to open the outlet port 12. The term "forward direction" as used herein refers to a direction in which the valve member 24 moves away from the outlet port 12 (the downward direction in FIG. 3), i.e., a valve opening direction, and the same applies hereinafter. Conversely, the "backward direction" refers to a direction in which the valve member 24 approaches the outlet port 12 (the upward direction in FIG. 3), i.e., a valve closing direction, and the same applies hereinafter.

In the illustrated example, the body portion 10 includes an inflow-side block 50 in which the inlet port 11 is formed. The inflow-side block 50 is disposed such that the inlet port 11 opens on a one end portion 50a side (a one end portion 10a side of the body portion 10) and the gaseous fuel supplied from a fuel supply device (not illustrated) flows in from the inlet port 11. The inflow-side block 50 is formed with an accommodating portion 30 in which a proximal end portion 20a side of the valve shaft portion 20 is accommodated between the inflow-side block 50 and a bearing block 60. The inflow-side block 50 is coaxially joined to the bearing block 60 and is held by an inflow-side sleeve 13 that has a cylindrical shape and is disposed around the inflow-side block 50 and the bearing block 60.

To coaxially join the inflow-side block 50 to the bearing block 60, a side of the other end 50b of the inflow-side block 50 facing the bearing block 60 is formed in a cylindrical shape in the illustrated example. At the same time, on a side of a one end 60a of the bearing block 60 facing the inflow-side block 50, a small-diameter columnar portion 61 is formed such that the one end 60a side is reduced in diameter via a step 62, the small-diameter columnar portion 61 having an outer diameter configured to be fitted into the side of the other end 50b of the inflow-side block 50 formed in the cylindrical shape. In this way, the inflow-side block 50 is joined to the small-diameter columnar portion 61 of the bearing block 60 by bringing an end edge on the other end 50b side formed in the cylindrical shape into abutment with the step 62, so that coaxiality between the inflow-side block 50 and the bearing block 60 is secured.

Further, on the one end 60a side of the bearing block 60, a large-diameter columnar portion 63a having an outer diameter configured to be fitted into the inflow-side sleeve 13 is formed, and a protrusion 64 protruding in a flange shape along the circumferential direction is formed on a circumferential surface of the large-diameter columnar portion 63a. In this way, when the inflow-side block 50 coaxially joined to the bearing block 60 is held, the end edge of the inflow-side sleeve 13 abuts against the protrusion 64, and the inflow-side sleeve 13 is joined to the large-diameter columnar portion 63a of the bearing block 60, so that the coaxiality therebetween is secured.

In addition, in the inflow-side block 50, a plurality of branch paths 51 extending radially outward are formed with respect to the inlet port 11 formed along the axial direction. In the illustrated example, the four branch paths 51 arranged at equal angular intervals along the circumferential direction are formed so as to extend along a direction orthogonal to the axial direction.

Each of the branch paths 51 formed in this manner communicates with the inlet port 11 as a part of the flow path FP through which the gaseous fuel supplied from the inlet port 11 flows, and opens on a circumferential surface 50c of the inflow-side block 50. As illustrated in the drawing, a portion of the inflow-side block 50 including at least a part of an opening 52 is formed to have a smaller diameter than a remaining portion 53 formed in a columnar shape having an outer diameter configured to be in close contact with an inner circumferential surface of the inflow-side sleeve 13. In this way, a gap 54 communicating with each of the branch paths 51 is formed between the circumferential surface 50c of the inflow-side block 50 and the inflow-side sleeve 13, and the gap 54 is formed as a part of the flow path through which the gaseous fuel flows.

On the other hand, in the bearing block 60, a first shaft hole 65 and a second shaft hole 66 that communicate with the flow path FP through which the gaseous fuel flows are formed together with a part of the flow path FP. The second shaft hole 66 has an inner diameter larger than an inner diameter of the first shaft hole 65. The first shaft hole 65 and the second shaft hole 66 are formed so as to overlap in the axial direction and pass through the bearing block 60. The first shaft hole 65 opens on the one end 60a side of the bearing block 60, and the second shaft hole 66 opens on the other end 60b side of the bearing block 60. The first shaft hole 65 is formed as a shaft hole through which the valve shaft 20, which moves forward and backward inside the body portion 10 along the axial direction, is slidably inserted, and the second shaft hole 66 is formed as a shaft hole through which a sleeve 42 of the solenoid 40 is inserted, which will be described later.

In addition, in the bearing block 60, a plurality of passages 67 extending radially outward are formed with respect to the first shaft hole 65 and the second shaft hole 66 formed along the axial direction. In the illustrated example, the four passages 67 arranged at equal angular intervals along the circumferential direction are formed so as to extend along a direction orthogonal to the axial direction.

Each of the passages 67 formed in this manner communicates with the second shaft hole 66 as a part of the flow path FP through which the gaseous fuel flows, and opens on a circumferential surface 60c of the bearing block 60. As illustrated in the drawing, a portion of the bearing block 60 on the inflow-side block 50 side including at least a part of such an opening is formed to have a diameter smaller than that of the large-diameter columnar portion 63a to which the inflow-side sleeve 13 is joined, and is substantially flush with the circumferential surface 60c on an end portion side formed in a cylindrical shape of the inflow-side block 50 joined to the small-diameter columnar portion 61 (the circumferential surface 50c of the portion formed to have a small diameter of the inflow-side block 50). In this way, a gap 68 communicating with each of the passages 67 is formed between the circumferential surface 60c of the bearing block 60 and the inflow-side sleeve 13, and the gap 68 is formed as a part of the flow path FP through which the gaseous fuel flows together with the gap 54 formed with respect to the circumferential surface 50c of the inflow-side block 50.

As a result, the gaseous fuel supplied from the inlet port 11 is guided to the gap 54 formed between the inflow-side block 50 and the inflow-side sleeve 13 via the branch paths 51 formed in the inflow-side block 50, and then flows along the axial direction so as to be guided into the bearing block 60 through the passages 67 formed in the bearing block 60.

In the illustrated example, the body portion 10 includes an outflow-side block 70 in which the outlet port 12 is formed, and an outflow-side sleeve 14 that holds the outflow-side block 70 coaxially with the inflow-side block 50 and the bearing block 60, in addition to the inflow-side block 50, the bearing block 60, and the inflow-side sleeve 13 described above.

The outflow-side sleeve 14 is formed to have the same diameter as the inflow-side sleeve 13. The end edge of the outflow-side sleeve 14 on a one end 14a side abuts against the protrusion 64 formed in the bearing block 60 from the side opposite to the side where the inflow-side sleeve 13 is joined, and the outflow-side sleeve 14 is joined to a large-diameter columnar portion 63b of the bearing block 60, so that coaxiality with respect to the inflow-side block 50 and the bearing block 60 is secured.

To coaxially join the outflow-side block 70 to the outflow-side sleeve 14, a one end 70a of the outflow-side block 70 facing the outflow-side sleeve 14 is formed in a cylindrical shape in the illustrated example. At the same time, on the one end 70a side of the outflow-side block 70, a large-diameter columnar portion 71 is formed such that the one end 70a side is reduced in diameter via a step 72, the large-diameter columnar portion 71 having an outer diameter configured to be fitted into an other end 14b side of the outflow-side sleeve 14 formed in a cylindrical shape. In this way, the outflow-side sleeve 14 is joined to the large-diameter columnar portion 71 of the outflow-side block 70 by bringing an end edge on the other end 14b side formed in the cylindrical shape into abutment with the step 72, so that coaxiality between the outflow-side block 70 and the outflow-side sleeve 14 is secured.

In addition, on the one end 70a side of the large-diameter columnar portion 71, a small-diameter columnar portion 73 having an outer diameter configured to be fitted into the sleeve 42 of the solenoid 40 is formed continuously with the large-diameter columnar portion 71 such that the one end 70a side is reduced in diameter via a step 74. Then, the sleeve 42 of the solenoid 40 is coaxially inserted into the second shaft hole 66 of the bearing block 60 and the small-diameter columnar portion 73 of the outflow-side block 70. In this way, coaxiality between the outflow-side block 70 and the bearing block 60 is secured. A sealing member 46 is mounted between the second shaft hole 66 and the sleeve 42 to prevent the gaseous fuel from flowing out to the outside of the flow path FP. An end surface of the small-diameter columnar portion 73 is provided with a buffer member 75 configured to mitigate impact and noise upon collision with the adjacently disposed plunger member 22.

Meanwhile, the outflow-side block 70 is formed with a first through-hole 76, a second through-hole 77, a third through-hole 78, and a fourth through-hole 79 which communicate with each other as a part of the flow path FP through which the gaseous fuel flows. The first through-hole 76, the second through-hole 77, the third through-hole 78, and the fourth through-hole 79 are formed so as to coaxially overlap in this order in the axial direction and to pass through the outflow-side block 70. The first through-hole 76 opens on the one end 70a side of the outflow-side block 70, and the fourth through-hole 79 opens on an other end 70b side of the outflow-side block 70 (an other end 10b side of the body portion 10). The second through-hole 77 includes a guide hole 771 and a passage 772 formed on the outer periphery of the guide hole 771 and through which the gaseous fuel can pass. A valve seat member 81 constituting a valve seat 80 is attached to the third through-hole 78, and the valve seat member 81 is held so as not to fall out by a fixing member 83 that has an annular shape and is fixed to the fourth through-hole 79. Details of the valve seat 80 will be described later. The first through-hole 76, the second through-hole 77, the third through-hole 78, and the fourth through-hole 79 are formed as through-holes through which the valve shaft portion 20 moving forward and backward inside the body portion 10 along the axial direction is inserted, and the periphery of the inserted valve shaft portion 20 is formed as a part of the flow path FP through which the gaseous fuel flows.

An introduction path of the atmosphere into the body portion 10 will be described with reference to FIG. 4. In the inflow-side block 50, an air vent 55 opens on the one end 50a side, and the air vent 55 communicates with the accommodating portion 30, so that the atmosphere can flow into the accommodating portion 30 from the air vent 55.

In the bearing block 60, a through-hole 69 is formed so as to extend from the one end 60a side to the other end 60b side. The through-hole 69 allows a space 41 in the body portion 10 in which the solenoid 40 is accommodated to communicate with the accommodating portion 30, and is disposed so that the atmosphere can flow into the space 41 through the accommodating portion 30. The through-hole 69 may be used as a wiring path for the solenoid 40.

### <Valve Structure of Injector 1>

Hereinafter, a valve structure of the injector 1 will be described. This valve structure is an on-off valve that operates to switch between a state (valve closed state) in which the valve member 24 of the valve shaft portion 20 is seated to close the flow path FP and a state (valve open state) in which the valve member 24 of the valve shaft portion 20 is separated to open the flow path FP by moving the valve shaft portion 20 forward and backward relative to the valve seat member 81 of the valve seat 80.

In a proximal-end-side member 21 of the valve shaft portion 20, on a circumferential surface on a one end 21a side, a flange portion 211 configured to receive the spring 31 is formed to protrude in a flange shape along the circumferential direction, and the spring 31 is compressed between a lower surface of the flange portion 211 and an upper surface of the bearing block 60. A connecting hole 212 for connection to the plunger member 22 is recessed along an axis from an end surface of an other end 21b toward the one end 21a. On the other hand, on a circumferential surface on the other end 21b side, an annular groove 213 is formed along the inner circumferential direction, and the annular groove 213 is provided with a sealing member 214, which has excellent airtightness and slidability and is formed using, for example, a material such as silicone rubber, and a ring member 215 which has excellent lubricity and is formed using, for example, a material such as fluororesin. When the sealing member 214 and the ring member 215 are in contact with an inner circumferential surface of the first shaft hole 65 of the bearing block 60, the other end 21b side of the proximal-end-side member 21 is airtightly and slidably inserted into the first shaft hole 65 of the bearing block 60. In this way, an end surface of the proximal-end-side member 21 facing the passage 67 of the bearing block 60 on the other end 21b side functions as a pressure receiving portion 25 having a surface that receives a pressure of the gaseous fuel introduced to the passage 67 in the backward direction.

In the plunger member 22 of the valve shaft portion 20, a connecting rod 221 having an outer diameter configured to be fitted into the connecting hole 212 of the proximal-end-side member 21 is formed on a one end 22a side such that the one end 22a side is reduced in diameter via a step 222. In the plunger member 22, as illustrated in the drawing, an insertion hole 223 formed from an other end 22b side toward the one end 22a side and a connecting hole 224, which has a smaller diameter than the insertion hole 223 and is formed from a terminal end of the insertion hole 223 toward the one end 22a side to be connected to a distal-end-side member 23, are recessed such that their axes are aligned with each other. Then, the plunger member 22 is provided with a passage 225 formed to allow an end surface of the step 222 on the one end 22a side to communicate with the insertion hole 223, so that the passage 225 and the insertion hole 223 are formed as a part of the flow path FP through which the gaseous fuel flows.

In the distal-end-side member 23 of the valve shaft portion 20, a connecting rod 231 having an outer diameter configured to be fitted into the connecting hole 224 of the plunger member 22 is formed on a one end 23a side such that the one end 23a side is reduced in diameter. In addition, the distal-end-side member 23 is provided, at a distal end portion, with the valve member 24 which has an umbrella shape having an inclined surface 24a and is formed such that an other end 23b side is increased in diameter. Meanwhile, a sliding portion 232 having a slightly larger diameter than the connecting rod 231 is formed in an intermediate portion 23c of the distal-end-side member 23 in the axial direction. The sliding portion 232 is configured to be slidable by being inserted into the guide hole 771 formed in the second through-hole 77 of the outflow-side block 70. In this way, it is possible to guide the forward and backward movement along the axial direction at two locations including the pressure receiving portion 25 of the proximal-end-side member 21 that airtightly slides within the first shaft hole 65 of the bearing block 60, so that the valve shaft portion 20 can move forward and backward in a stable posture.

The valve seat 80 includes the valve seat member 81, which has an annular shape and has a valve hole 82 at the center, and the fixing member 83, and is formed using an elastic material such as rubber or a synthetic resin. In the injector 1 illustrated as an example, the valve hole 82 serves as the outlet port 12 for the gaseous fuel. The valve hole 82 of the valve seat member 81 forms a part of the flow path FP through which the gaseous fuel flows. An annular groove 84 is formed on an outer circumferential surface of the valve seat member 81, and a sealing member 85 is provided in the annular groove 84. The sealing member 85 allows the valve seat member 81 to be airtightly attached to the third through-hole 78 except for the valve hole 82. The valve hole 82 has a large diameter on a one end 82a side and an other end 82b side, and an intermediate portion 82c in the axial direction is a throttle portion having a small diameter. An inner circumferential edge of the valve hole 82 on the other end 82b side has an R shape, and the inclined surface 24a of the valve member 24 is configured to be capable of coming into contact with and separating from the inner circumferential edge. In this way, a part of the inclined surface 24a of the valve member 24 (the inner side of a sealing diameter with the inner circumferential edge of the valve hole 82) is configured as a pressure receiving portion 26 having a surface that receives the pressure of the gaseous fuel introduced to the valve hole 82 in the forward direction.

### <Operation of Injector 1>

Hereinafter, the operation of the injector 1 will be described.

The solenoid 40 that drives the valve shaft portion 20 is disposed along an inner circumferential surface of the outflow-side sleeve 14. More specifically, the solenoid 40 is disposed in the space 41 defined by the bearing block 60, the outflow-side block 70, and the outflow-side sleeve 14, and includes the sleeve 42, an electromagnetic coil 43, a plunger 44, and a core 45. The plunger 44 is configured by the plunger member 22 of the valve shaft portion 20. The core 45 is configured by the small-diameter columnar portion 73 of the outflow-side block 70. The electromagnetic coil 43 is disposed outside the sleeve 42, and the plunger 44 and the core 45 are disposed on an inner circumferential side of the sleeve 42.

The injector 1 is a normally-closed injector, and thus is in the valve closed state in which the valve member 24 is biased in the backward direction by the elasticity of the compressed spring 31 and is seated on the valve seat member 81 of the valve seat 80 when the solenoid 40 is not energized. The solenoid 40 is operated by a current supplied from a control device such as an in-vehicle ECU, for example, based on a flow rate required on the downstream side. When the solenoid 40 is energized, the plunger 44 moves in the forward direction by being attracted by the core 45 magnetized by the electromagnetic coil 43, and the valve member 24 of the valve shaft portion 20 is separated from the valve seat member 81 of the valve seat 80 to open the flow path FP to allow the fluid to flow out. Then, when the solenoid 40 is de-energized, the valve member 24 is biased in the backward direction by the elasticity of the spring 31, and the valve member 24 of the valve shaft portion 20 is seated on the valve seat member 81 of the valve seat 80 to close the flow path FP and stop the outflow of the fluid.

The first shaft hole 65 is formed between the passage 67 and the accommodating portion 30, and the pressure receiving portion 25 of the proximal-end-side member 21 of the valve shaft portion 20 is configured to be airtightly slidable in the first shaft hole 65. While a pressure inside the accommodating portion 30 communicating with the atmosphere is equal to the atmospheric pressure, a pressure of the flow path FP (a portion of the passage 67) through which the gaseous fuel flows becomes relatively high due to the pressure of the gaseous fuel. As a result, the pressure of the flow path FP (the portion of the passage 67) acts on the pressure receiving portion 25 of the proximal-end-side member 21 sliding in the first shaft hole 65, thereby generating a force for pushing the proximal-end-side member 21 in the backward direction.

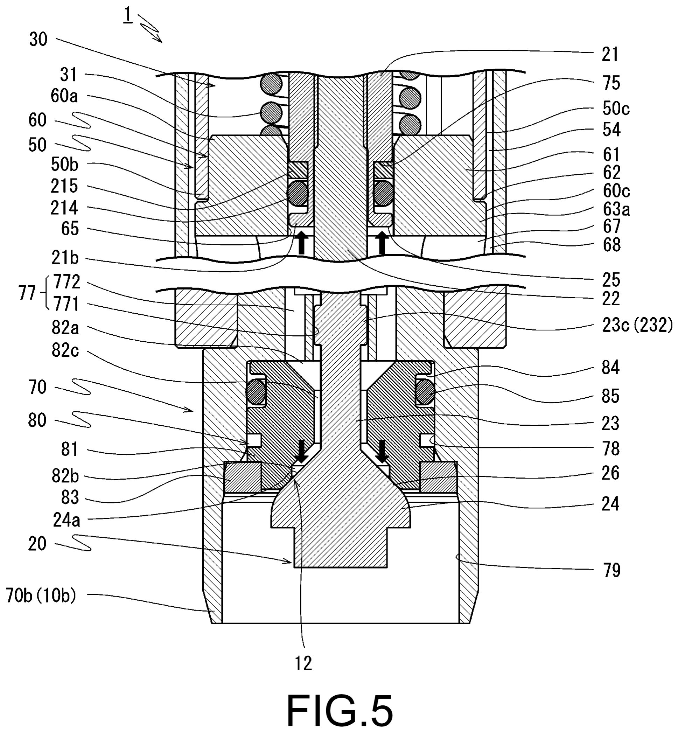

Therefore, during the operation of the injector 1, a force (downward black arrows illustrated in FIG. 5) for moving the valve member 24 in the forward direction is generated by the pressure receiving portion 26 having the surface that receives the pressure of the gaseous fuel introduced to the valve hole 82 through the flow path FP in the forward direction, and a force (upward black arrows illustrated in FIG. 5) for moving the valve member 24 in the backward direction is generated by the pressure receiving portion 25 having the surface that receives the pressure of the gaseous fuel introduced to the passage 67 in the backward direction. Therefore, in consideration of the force for moving the valve member 24 in the backward direction, the elasticity of the spring 31 can be set to be weak by that amount, and the valve member 24 can be easily opened even when the pressure in the body portion 10 is low as compared with a conventional example in which a pressure of introduced gaseous fuel only acts in a valve opening direction of a valve member. In addition, it is not necessary to increase an electromagnetic attraction force of the solenoid 40, and various problems caused by increasing the electromagnetic attraction force of the solenoid can be avoided.

At this time, the surface by which the pressure receiving portion 26 of the valve member 24 receives the pressure of the gaseous fuel introduced to the valve hole 82 in the forward direction and the surface by which the pressure receiving portion 25 receives the pressure of the gaseous fuel introduced to the passage 67 in the backward direction are configured to have substantially equal projection areas on planes (projection planes) orthogonal to the axial direction. The "projection areas" as used herein are areas when these surfaces are projected perpendicular to the projection planes, that is, areas of orthographic projection. As a result, the force by which the pressure of the gaseous fuel pushes the pressure receiving portion 26 in the forward direction and the force by which the pressure of the gaseous fuel pushes the pressure receiving portion 25 in the backward direction are balanced, and the influence of the supply pressure to the valve member 24 can be minimized. Therefore, it is possible to more reliably facilitate the opening of the valve member 24 as compared with the conventional example.

Note that the injector 1 illustrated as the example includes an adjustment spring 91 configured to bias the proximal-end-side member 21 in the forward direction to adjust the spring load of the spring 31. The adjustment spring 91 is located closer to the inlet port 11 than the spring 31 in the accommodating portion 30, and is disposed between a receiving member 93 that moves in the axial direction by a rod 92 movable forward and backward and the proximal-end-side member 21. The rod 92 moves by the pressure of the gaseous fuel supplied from the inlet port 11 and compresses the adjustment spring 91. Since the adjustment spring 91 is provided as described above, it is possible to absorb variation in the spring load due to an individual difference of the spring 31, but the adjustment spring 91 may be omitted.

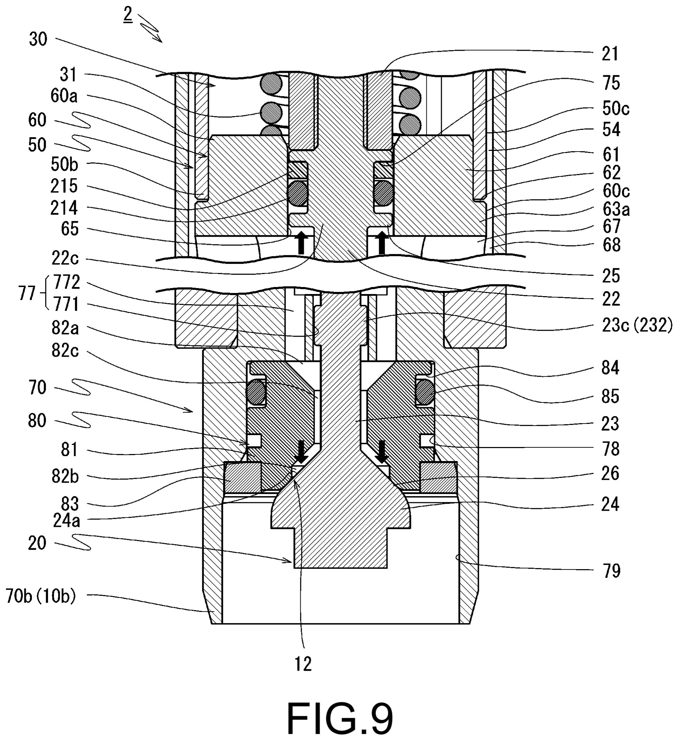

FIG. 9 is an enlarged sectional view of the main part of an injector 2 according to a different embodiment of the present invention. Since the injector 2 is different only in terms of the configuration of the pressure receiving portion 25 and has the same configuration as the injector 1 except for the difference, the same components are denoted by the same reference signs, and the description thereof will be omitted. That is, the pressure receiving portion 25 in the injector 1 is provided on the end surface on the other end 21b side of the proximal-end-side member 21, but the pressure receiving portion 25 in the injector 2 is provided in an intermediate portion 22c of the plunger member 22. Even with such a configuration, since the function as the pressure receiving portion 25 is not different, an appropriate change can be made in accordance with the convenience of design and manufacture.

Those skilled in the art can easily make many modifications to these exemplary embodiments without substantially departing from the novel teachings and effects of the present invention, and these many modifications fall within the scope of the present invention.

### Reference Signs List

- 1, 2: Injector
- 10: body portion
- 10a: one end
- 10b: other end
- 11: inlet port
- 12: outlet port
- 13: inflow-side sleeve
- 13a: one end
- 13b: other end
- 14: outflow-side sleeve
- 14a: one end
- 14b: other end
- 20: valve shaft portion
- 20a: proximal end
- 20b: distal end portion
- 21: proximal-end-side member
- 21a: one end
- 21b: other end
- 211: flange portion
- 212: connecting hole
- 213: annular groove
- 214: sealing member
- 215: ring member
- 22: plunger member
- 22a: one end
- 22b: other end
- 22c: intermediate portion
- 221: connecting rod
- 222: step
- 223: insertion hole
- 224: connecting hole
- 225: passage
- 23: distal-end-side member
- 23a: one end
- 23b: other end
- 23c: intermediate portion
- 231: connecting rod
- 232: sliding portion
- 24: valve member
- 24a: inclined surface
- 25, 26: pressure receiving portion
- 30: accommodating portion
- 31: spring
- 40: solenoid
- 41: space
- 42: sleeve
- 43: electromagnetic coil
- 44: plunger
- 45: core
- 46: sealing member
- 50: inflow-side block
- 50a: one end
- 50b: other end
- 50c: circumferential surface
- 51: branch path
- 52: opening
- 53: remaining portion
- 54: gap
- 55: air vent
- 60: bearing block
- 60a: one end
- 60b: other end
- 60c: circumferential surface
- 61: small-diameter columnar portion
- 62: step
- 63a, 63b: large-diameter columnar portion
- 64: protrusion portion
- 65: first shaft hole
- 66: second shaft hole
- 67: passage
- 68: gap
- 69: through-hole
- 70: outflow-side block
- 70a: one end
- 70b: other end
- 71: large-diameter columnar portion
- 72: step
- 73: small-diameter columnar portion
- 74: step
- 75: buffer member
- 76: first through-hole
- 77: second through-hole
- 771: guide hole
- 772: passage
- 78: third through-hole
- 79: fourth through-hole
- 80: valve seat portion
- 81: valve seat member
- 82: valve hole
- 82a: one end
- 82b: other end
- 82c: intermediate portion
- 83: fixing member
- 84: annular groove
- 85: sealing member
- 91: adjustment spring
- 92: rod
- 93: receiving member
- FP: flow path

## Claims

1. An electromagnetically driven injector (1) that injects gaseous fuel into a cylinder of an engine, the injector (1) comprising:
a body portion (10) in which at least a part of a flow path (FP) is formed to allow the gaseous fuel supplied from an inlet port (11) to flow toward an outlet port (12) side along an axial direction;
a valve shaft portion (20) disposed to be movable forward and backward inside the body portion (10) along the axial direction, the valve shaft portion (20) provided with, at a distal end portion (20b), a valve member (24) configured to open and close the outlet port (12);
a spring (31) configured to bias the valve shaft portion (20) in a backward direction to close the outlet port (12); and
a solenoid (40) configured to drive the valve shaft portion (20) in a forward direction against elasticity of the spring (31) to open the outlet port (12),
wherein the valve shaft portion (20) includes a pressure receiving portion (25) configured to receive a pressure of the gaseous fuel flowing in the flow path (FP) in the backward direction.

2. The injector (1) according to claim 1, wherein
the body portion (10) includes:
an inflow-side block (50) in which the inlet port (11) is formed;
a bearing block (60) in which a first shaft hole (65) and a second shaft hole (66), which communicate with the flow path (FP), are formed together with a part of the flow path (FP), the first shaft hole (65) opening on a one end (60a) side, and the second shaft hole (66) opening on an other end (60b) side;
an inflow-side sleeve (13) configured to hold the inflow-side block (50) coaxially joined to the bearing block (60), the inflow-side sleeve (13) forming a part of the flow path (FP) between the inflow-side block (50) and the bearing block (60);
an outflow-side block (70) in which the outlet port (12) is formed; and
an outflow-side sleeve (14) configured to hold the outflow-side block (70) coaxially with the inflow-side block (50) and the bearing block (60).

3. The injector (1) according to claim 2, wherein
the valve shaft portion (20) includes:
a proximal-end-side member (21) provided with a flange portion (211) on a one end (21a) side, the flange portion (211) being configured to receive the spring (31) between the proximal-end-side member (21) and the bearing block (60), an other end (21b) side of the proximal-end-side member (21) being airtightly and slidably inserted into the first shaft hole (65) of the bearing block (60);
a plunger member (22) formed to communicate with a part of the flow path (FP) from a one end (22a) side to an other end (22b) side along the axial direction; and
a distal-end-side member (23) in which the valve member (24) is provided at a distal end portion,
wherein the proximal-end-side member (21), the plunger member (22), and the distal-end-side member (23) are coaxially joined, and an end surface on the other end (21b) side of the proximal-end-side member (21) functions as the pressure receiving portion (25).

4. The injector (1) according to claim 2, wherein, in the inflow-side block (50), a plurality of branch paths (51) extending radially outward are formed as a part of the flow path (FP) to communicate with the inlet port (11), a portion of the inflow-side block (50) on the bearing block (60) side, including at least a part of an opening (52) of each of the branch paths (51), is formed to have a small diameter, and a part of the flow path (FP) communicating with each of the branch paths (51) is formed between a circumferential surface (50c) of the inflow-side block (50) and the inflow-side sleeve (13).

5. The injector (1) according to claim 2, wherein, in the bearing block (60), a plurality of passages (67) extending radially outward are formed as a part of the flow path (FP) to communicate with the second shaft hole (66), a portion of the bearing block (60) on the inflow-side block (50) side, including at least a part of an opening of each of the passages (67), is formed to have a small diameter, and a part of the flow path (FP) communicating with each of the passages (67) is formed between a circumferential surface (60c) of the bearing block (60) and the inflow-side sleeve (13).

6. The injector (1) according to claim 3, wherein the solenoid (40) is disposed along an inner circumferential surface of the outflow-side sleeve (14), and the plunger member (22) of the valve shaft portion (20) is disposed on an inner circumferential side of the solenoid (40).

7. The injector (1) according to any one of claims 1 to 6, wherein a surface on which the valve member (24) receives a pressure of the gaseous fuel in the forward direction (a pressure receiving portion 26) and a surface on which the pressure receiving portion (25) receives the pressure of the gaseous fuel in the backward direction have substantially equal projection areas on planes orthogonal to the axial direction.
